# EUROPEAN PATENT SPECIFICATION

(11) **EP 0 270 174 B1**
(45) Date of publication and mention of the grant of the patent: **17.03.1993**
(21) Application number: 87202320.5
(22) Date of filing: 25.11.1987
(51) Int. Cl.: G01N 27/00

(54) **Ion-sensitive device**
Ionenempfindliche Vorrichtung
Dispositif sensible aux ions

(30) Priority: 04.12.1986 IT 2256186
(43) Date of publication of application: 08.06.1988
(73) Proprietor: ENIRICERCHE S.p.A., 20121 Milano (IT)
(72) Inventor: Battilotti, Massimo, I-00128 Tor De Cenci Rome (IT); Barbaro, Aurelio, I-00060 Capena Rome (IT)
(74) Representative: Roggero, Sergio

(56) References cited:
- GB-A- 2 017 400
- PATENT ABSTRACTS OF JAPAN, vol. 9, no. 79 (P-347)[1802], 9th April 1985; & JP-A-59 210 356 (KURARAY K.K.) 29-11-1984
- PATENT ABSTRACTS OF JAPAN, vol. 10, no. 26 (P-425)[2083], 31th January 1986; & JP-A-60 177 256 (SHIMAZU SEISAKUSHO K.K.) 11-09-1985
- CHEMICAL ABSTRACTS, vol. 105, 1986, page 25, abstract no. 43709s, Columbus, Ohio, US; P.G. HALL et al.: "Ion conductivity in polysiloxane comb polymers with ethylene glycol teeth", & POLYM. COMMUN. 1986, 27(4), 98-100

## Description

The present invention is concerned with a device sensitive to ions, with the relevant preparation processes, containing a polymeric organic matrix, an ionophore, a polysiloxanic matrix and a device of EOS (Electrolyte Oxide Semiconductor) or CHEMFET type, which devices represent the structures respectively analogue to the devices of MOS or MOSFET type, wherein the metal layer on the sensitive portion is replaced by a selective membrane.

The conventional chemical electrodes (ISE) and the solid-state electrodes of ion-sensitive field-effect transistor types (ISFET) are constituted by a polymeric matrix, wherein an ion-carrying ionophore is dissolved.

As the polymeric matrix, generally polyvinyl chloride (PVC) is used.

The ionophores used can be open-structure organic molecules (for example ETH 227, ETH 1001, ETH 1644), or cyclic-structure organic molecules (of the type of valinomycin, crown ethers, cryptands, and so forth), by referring to a work published on Analytica Chimica Acta 180 (1986), pages 299-311.

They have the characteristic of forming ion-permeable channels.

Both the ionophore and the polymer are dissolved in an organic solvent, e.g., tetrahydrofuran (THF), normally in the presence of a plastifier.

Membranes of this type deposited on CHEMFET devices are described in "Potassium Ion-Selective Field Effect Transistor" (Anal. Chem., Vol. 47, No. 13, 2238, 1975) by S.D. Moss, J.Janata and C.C, Johnson, and in Valinomycin-Doped Photoresist Layers for Potassium Ion Sensing" (Thin Solid Films, 70, 1980, page 333) by C.C. Wern, I. Lanks, M. Zemel.

The most common drawback which one can meet with in such a type of electrodes, and, in particular, for the organic films, is that in case of a prolonged usage in water, in as much as on the basis of the same electrode no chemical adhesion, of any type, exists, a swelling can occur, with the consequent detachment of the organic film.

In the realization of devices of EOS and CHEMFET types devices, furthermore, one should always keep in his mind the need of obtaining such polymeric structures in an economically favourable way, and compatibly with those which are the device realization technologies.

The present Applicant has surprisingly found that by using as the polymeric matrix a polymethacryloyl chloride together with a polysiloxanic matrix selected from determined functional organosilanes, the possibility is avoided that the organic film may break off.

A first object of the present invention is an ion-sensitive device consisting of the following superposedly arranged elements:
- an aluminium electrode plate (1);
- a silicon body (2);
- a layer of SiO₂ (3);
- a membrane (4) comprising a polysiloxane matrix (5) and a ionophore-containing organic polymeric matrix (6), and
- a platinum electrode (8),
characterized in that:
the polymeric organic matrix (6) is a linear polymethacryloyl chloride, and in that:
the polysiloxane matrix (5) is selected either
- from the group of the functional organosilanes having the general formula: 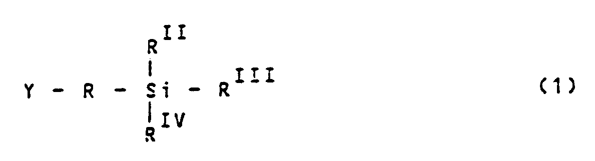 wherein:
   R^{II}, R^{III}, RI^{V}, equal to, or different from, each other, are C₁-C₁₀ alkyl or alkoxy;
   R is a C₁-C₁₀ alkyl or aryl, and Y is -NH₂ or -NHCH₂-CH₂-NH₂ or
- from the group of the functional organosilanes having the general formula: 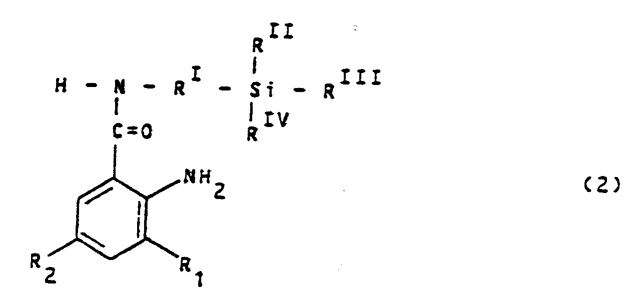 wherein:
   R₁ and R₂,equal to, or different from, one another, are -Cl, -Br, -CH₃,-NO₂, -NH₂, or -H;
   R^{II}, R^{III} and R^{IV} are C₁-C₁₀ alkyl or alkoxy, and
   R^{I} is selected from C₁-C₁₀ alkyl, aminoalkyl, aminoalkylaryl or alkylaryl.

For example, as the polysiloxanic matrices, aminoethyl-aminopropyl-trimethoxysilane (AEAPS) or anthranylamide-propyl-triethoxysilane can be used.

As the ionophores, open-structure organic molecules (of, for example ETH 227, ETH 1001, ETH 1644), or cyclic-structure organic molecules (of the type, e.g., of valinomycin, crown ethers, cryptands, and so forth) can be used. The devise of EOS type, besides the presence of silicon oxide on its surface, must contain in its region under the same silicon oxide a layer of aluminum or of gold, deposited by evaporation.

In case a functional organosilane having the above specified formula (2) is used, the process for obtaining it is based on the reaction between isatoic anhydride, or its derivatives, with amino-silanes of 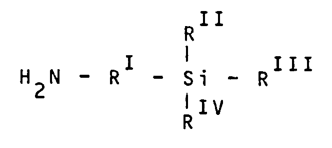
type, according to the following reaction diagram:

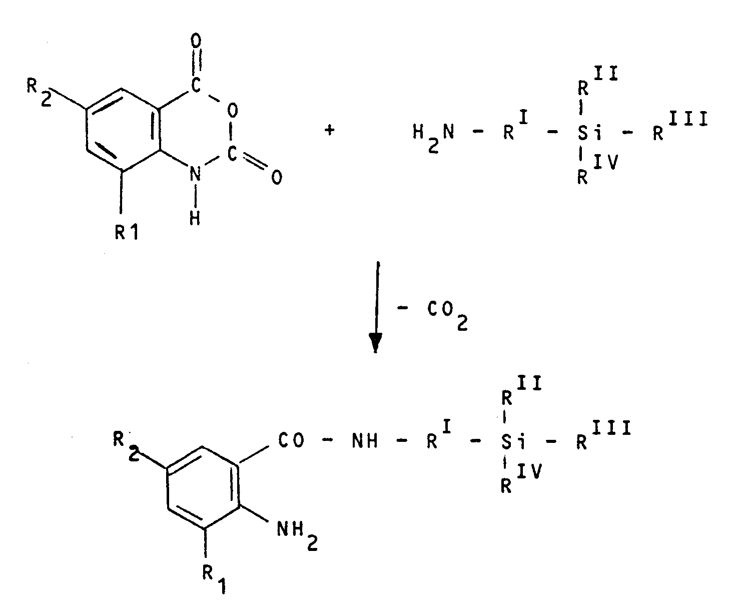

The silanes which are practically preferred in order to obtain the functional organosilane according to the purposes of the present invention are:
- 3-aminopropyl-triethoxysilane

   H₂N-(CH₂)₃-Si-(OC₂H₅)₃
- aminomethyl-triethoxysilane

   H₂N- CH₂ -Si-(OC₂H₅)₃
- 2-aminoethyl-aminopropyl-trimethoxysilane

   H₂N-CH₂-NH-(CH₂)₃-Si(OCH₃)₃
- 2-aminoethyl-aminopropyl-triethoxysilane

   H₂N-(CH₂)₂-NH-(CH₂)₃-Si(OC₂H₅)₃
- 2-aminoethyl-aminopropyl-methyldimethoxysilane

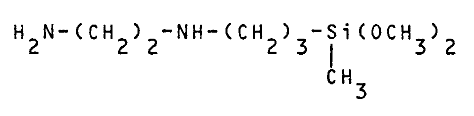

The reaction of synthesis is carried out by gradually adding isatoic anhydride to the aminosilane in the presence, or in the absence of solvent. By carrying out the reaction in a solvent, it is obviously necessary that this latter does not give rise reactions with isatoic anhydride; in case of hydroxylated solvents, e.g., the reaction shall be necessarily carried out under mild conditions, and in the absence of possible catalysts. However, as the solvents, alcohols, ethers, chlorinated solvents, etc., can be used; it is obviously necessary to operate under conditions of absence of water, which would cause the hydrolysis of the alkoxy moiety.

The reaction can also be carried out by adding the whole amount of isatoic anhydride all at a same time, with due allowance being made for the slight exothermicity of the reaction (it will be necessary to cool the reaction mass) and for the fact that, notwithstanding the considerable difference in reactivity between the aliphatic amine (the aminosilane) and the aromatic amine (the reaction product), oligomeric products of 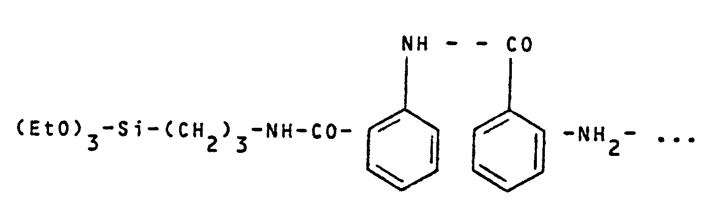
type could be formed.

Another object of the present invention consists in the process for obtaining the ion-sensitive device, comprising the steps of:
- preparing a siloxane pre-polymer;
- depositing the siloxane pre-polymer onto at least one EOS (Electrolyte Oxide Semiconductor) device, or one (Chemical Field-Effect Semiconductor) device;
- Heat treating said device to obtain a polysiloxane matrix and the chemical adhesion of said matrix to the silicon oxide;
- dissolving polymethacryloyl chloride and a facultatively functionalized ionophore in an organic solvent;
- depositing the resultant solution on the polysiloxane matrix;
- Heat treating the solution-coated polysiloxane matrix;
- Solvolyzing the unreacted -COCI groups of the polymethacryloyl chloride in a solution of a solute selected from primary-, secondary, and tertiary aliphatic, aromatic, alkylaromatic alcohols, glycols or polyols, or primary, or secondary, aliphatic, aromatic, or alkylaromatic amines, or diamines or polyamines, in the presence of an organic base,
the siloxane pre-polymer and the solution which contains the polymer and the ionophore being spin-on deposited by means of a rotary disk machine.

The thermal treatments of the siloxanic prepolymer and of the polymethacryloyl-chloride-containing solution deposited on the polysiloxanic layer are preferably carried out at a temperature comprised within the range of from 80°C to 140°C.

The deposited thickness of the siloxanic prepolymer must be preferably comprised within the range of from 0.5 to 2 µm, and the deposited thickness of the polymethacryloyl-chloride-containing solution must be preferably comprised within the range of from 0.5 to 5 µm.

As relates to the rotary-disk equipment, it should preferably operate for the depositions at a speed comprised within the range of from 400 to 4,500 revolutions per minute.

The above-disclosed process makes it possible to obtain both devices wherein the ionophore is physically entrapped by the polymethacryloyl chloride, and devices wherein the ionophore is chemically linked by means of essentially covalent chemical bonds to polymethacryloyl chloride.

In order to obtain a physical entrapping, as the ionophore, organic molecules can be used which have an open structure, such as, for example ETH 227, ETH 1001, ETH 1644; or organic molecules which have a cyclic structure, such as, e.g., of valinomycin, crown ethers, cryptands, etc., type; on the contrary, in order to obtain a chemical bond, functionalized ionophores must be used, which are preferably selected from the group consisting of the crown ethers, such as diamino-dibenzo-crown ethers or their homologues or derivatives (e.g., dibenzo-18-6-crown ether).

A second process can be used in order to only obtain a chemical bond between the ionophore and polymethacryloyl chloride comprising the steps of:
- preparing a siloxane pre-polymer;
- depositing the siloxane pre-polymer onto at least one EOS (Electrolyte Oxide Semiconductor) device, or one CHEMFET (Chemical Field-Effect Semiconductor) device;
- Heat treating said device to obtain a polysiloxane matrix and the chemical adhesion of said matrix to the silicon oxide;
- dissolving polymethacryloyl chloride and a functionalized ionophore in an organic solvent;
- Reacting the functionalized ionophore with polymethacryloyl chloride at a temperature of from 40°C to 70°C for a time from 4 to 6 hours;
- depositing the resultant solution on the polysiloxane matrix;
- Heat treating the solution-coated polysiloxane matrix;
- Solvolyzing the unreacted -COCl groups of the polymethacryloyl chloride in a solution of a solute selected from primary-, secondary, and tertiary aliphatic, aromatic, alkylaromatic alcohols, glycols or polyols, or primary, or secondary, aliphatic, aromatic, or alkylaromatic amines, or diamines or polyamines, in the presence of an organic base,
the siloxane pre-polymer and the solution which contains the polymer and the ionophore being spin-on deposited by means of a rotary disk machine.

The temperatures of the thermal treatments, the deposited thicknesses of the compounds and the speed (rpm) at which the rotary-disk equipment operates are the same as specified for the first process.

The functionalized ionophore must be preferably selected from the group consisting of the crown ethers, such as, e.g., diamino-dibenzo-crown ethers, or their homologues or derivatives (e.g., dibenzo-18-6-crown ether).

The functionalization of the ionophore is carried out by functionalizing the aromatic rings with amino or aminoalkyl groups.

Some examples are now supplied, which have the purpose of better explaining the invention without however limiting it.

### Example 1

A polymeric layer sensitive to potassium ion was prepared; it was obtained by following the above-disclosed first route.

On plates of 1 cm x 1 cm of oxidated silicon a solution of polysiloxane partially hydrolysed in a water-alcoholic medium was deposited, which contained:
- 21% of amino-ethylamino-propyl-trimethoxysilane
- 3% of CH₃COOH
- 1% of H₂O
in absolute ethanol.

Three deposition runs were carried out by means of a rotary-disk equipment operating at the speed of 3,500 rpm for 20 seconds.

The excess of this solution of oligomer deposited on the sample was removed by centrifugation by means of the revolution motion of the holder plate.

After the thermal curing at 120°C for 16 hours, a deposition was carried out by means of the rotary-disk equipment revolving at the speed of 3,500 rpm for 20 seconds, of a solution containing:
- 0.35 ml (cc) of polymethacryloyl chloride manufactured by POLYSCIENCES
- 10 mg of valinomycin
- 0.65 ml (cc) of tetrahydrofuran

After the thermal curing at 120°C for 8 hours, a solvolysis with ethyl alcohol of the residual surface - COCl groups was carried out by treating the plates with a solution containing acetone, ethyl alcohol and triethylamine for 6 hours at 40°C.

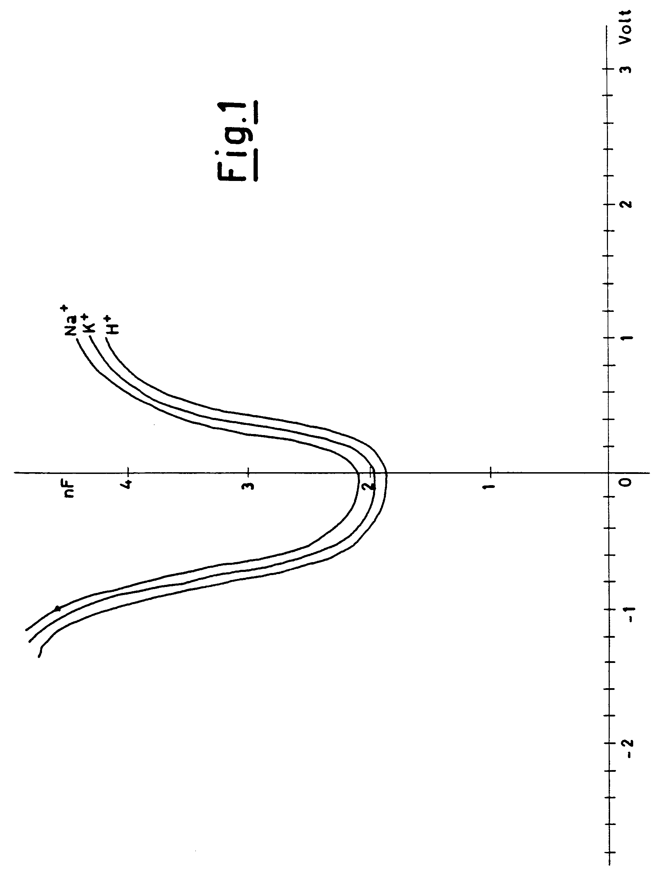

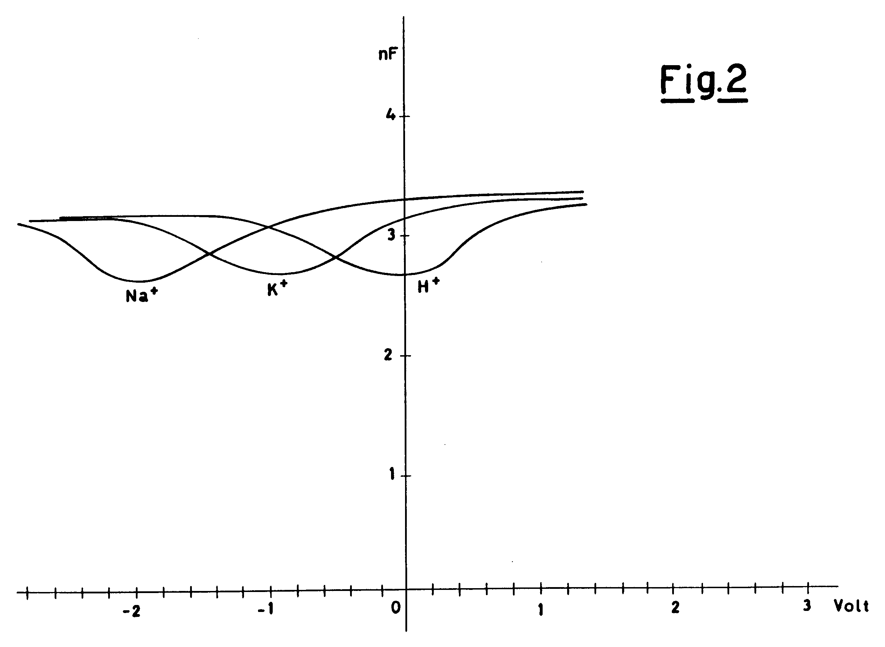

In Figures 1 and 2, the curves are reported which relate to the capacity/voltage electrical measurements carried out at 120 Hz on the obtained device, for the two layers of:
1) Si/SiO₂/Silane;
2) Si/SiO₂/Silane/Polymer-Ionophore
in solutions containing 10⁻³ M H⁺, Na⁺, K⁺ ions.

The C/V charts on EOS are generally taken into consideration in semiconductor technology, as a test to check the operation of the corresponding transistors.

One can observe the univocal shift towards different capacity values of the ions in the presence of the polymeric selective layer.

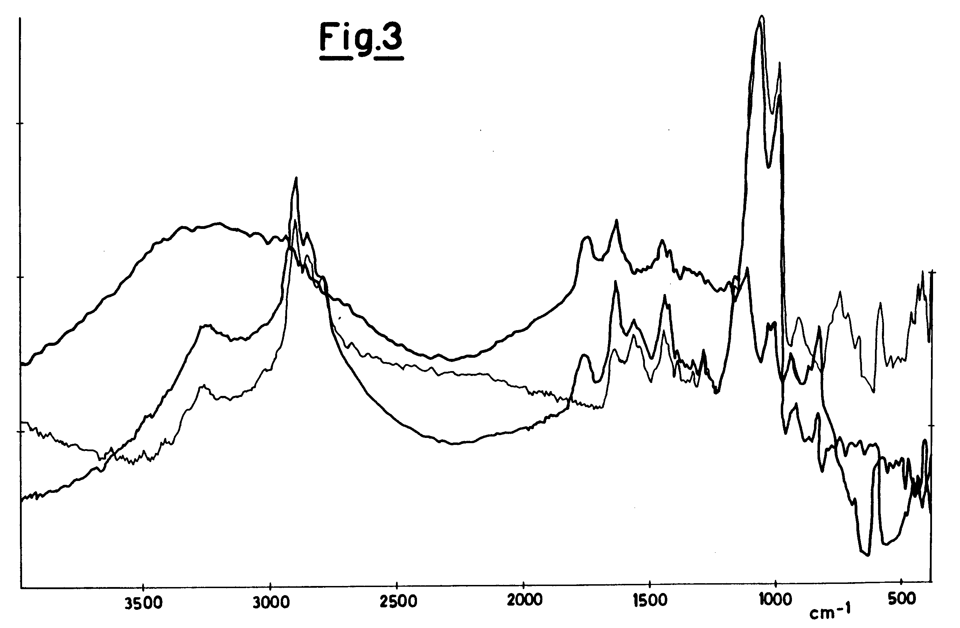

In Figure 3, three Fourier-Transform I.R. spectra (F.T.I.R.) are shown, which are obtained in transmission mode on an MOS sample on which a complete membrane is deposited; of them, the spectrum shown in lightest line relates to Si/SiO₂/Silane, the one shown in medium-thickness line relates to Si/SiO₂/Silane/polymethacryloyl chloride and valinomycin, and the spectrum shown in thickest line related to the difference between the two foregoing spectra.

From the difference spectrum, the presence of the polymer and of valinomycin is clearly evidenced.

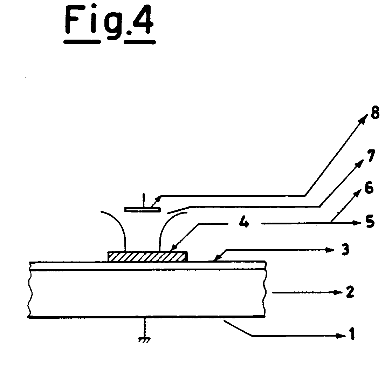

Figure 4 shows a diagram of an EOS device complete with membrane, wherein the meaning of the reference numerals is the following:
- 1:: aluminum
- 2:: silicon
- 3:: silicon oxide
- 4:: membrane
- 5:: silane
- 6:: polymer and ionophore
- 7:: solution
- 8:: platinum electrode

### Example 2

Still according to the first process, another polymeric layer sensitive to potassium ions was prepared.

On plates of 1 cm × 1 cm of oxidated silicon a solution of polysiloxane partially hydrolysed in an alcoholic medium was deposited, which contained:
- 21% of amino-ethylamino-propyl-trimethoxysilane
- 3% of CH₃COOH
- 1% of H₂O
in absolute ethanol.

Three depositions were carried out by means of a rotary-disk equipment operating at the speed of 3,500 rpm for 20 seconds.

After the thermal curing at 120°C for 16 hours, a deposition was carried out by means of the rotary-disk equipment revolving at the speed of 3,500 rpm for 20 seconds, of a solution containing:
- 0.40 ml (cc) of polymethacryloyl chloride manufactured by POLYSCIENCES
- 20 mg of dibenzo-18-6-crown ether
- 0.60 ml (cc) of chloroform.

After thermal curing at 120°C for 8 hours, a solvolysis was carried out by treating the plates with a solution containing acetone, ethyl alcohol and triethylamine for 6 hours at 40°C.

## Claims

1. An ion-sensitive device consisting of the following superposedly arranged elements:
- an aluminium electrode plate (1);
- a silicon body (2);
- a layer of SiO₂ (3);
- a membrane (4) comprising a polysiloxane matrix (5) and a ionophore-containing organic polymeric matrix (6), and
- a platinum electrode (8),
characterized in that:
the polymeric organic matrix (6) is a linear polymethacryloyl chloride, and in that:
the polysiloxane matrix (5) is selected either
- from the group of the functional organosilanes having the general formula: 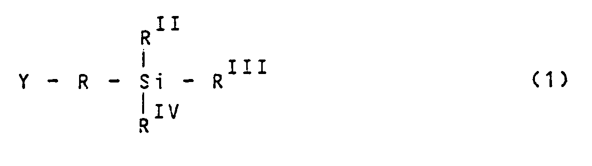 wherein:
R^{II}, R^{III}, RI^{V}, equal to, or different from, each other, are C₁-C₁₀ alkyl or alkoxy;
R is a C₁-C₁₀ alkyl or aryl , and Y is -NH₂ or -NHCH₂-CH₂-NH₂
or
- from the group of the functional organosilanes having the general formula: 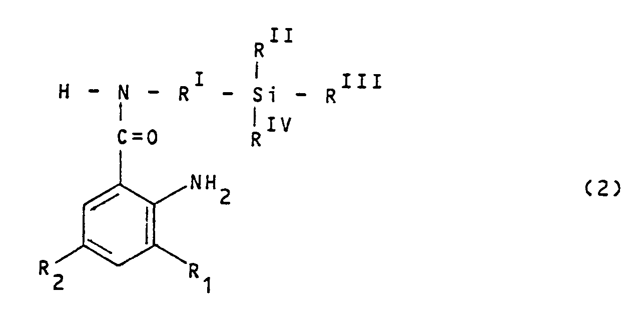 wherein:
R₁ and R₂,equal to, or different from, one another, are -Cl, -Br, -CH₃,-NO₂, -NH₂, or -H;
R^{II}, R^{III} and R^{IV} are C₁-C₁₀ alkyl or alkoxy, and
R^{I} is selected from C₁-C₁₀ alkyl, aminoalkyl, aminoalkylaryl or alkylaryl.

2. Device according to Claim 1, wherein the ionophore is physically entrapped by the polymethacryloyl chloride.

3. Device according to Claim 1, wherein polymethacryloyl chloride is predominantly covalently bonded to the ionophore.

4. Process for preparing a device as defined in Claim 1, comprising the steps of:
- preparing a siloxane pre-polymer;
- depositing the siloxane pre-polymer onto at least one Electrolyte Oxide Semiconductor device, or one Chemical Field-Effect Semiconductor device;
- Heat treating said device to obtain a polysiloxane matrix and the chemical adhesion of said matrix to the silicon oxide;
- dissolving polymethacryloyl chloride and a facultatively functionalized ionophore in an organic solvent;
- depositing the resultant solution on the polysiloxane matrix;
- Heat treating the solution-coated polysiloxane matrix;
- Solvolyzing the unreacted -COCl groups of the polymethacryloyl chloride in a solution of a solute selected from primary-, secondary, and tertiary aliphatic, aromatic, alkylaromatic alcohols, glycols or polyols, or primary, or secondary, aliphatic, aromatic, or alkylaromatic amines, or diamines or polyamines, in the presence of an organic base,
the siloxane pre-polymer and the solution which contains the polymer and the ionophore being spin-on deposited by means of a rotary disk machine.

5. Process for preparing a device as defined in Claim 3, comprising the steps of:
- preparing a siloxane pre-polymer;
- depositing the siloxane pre-polymer onto at least one Electrolyte Oxide Semiconductor device, or one Chemical Field-Effect Semiconductor device;
- Heat treating said device to obtain a polysiloxane matrix and the chemical adhesion of said matrix to the silicon oxide;
- dissolving polymethacryloyl chloride and a functionalized ionophore in an organic solvent;
- Reacting the functionalized ionophore with polymethacryloyl chloride at a temperature of from 40°C to 70°C for a time from 4 to 6 hours;
- depositing the resultant solution on the polysiloxane matrix;
- Heat treating the solution-coated polysiloxane matrix;
- Solvolyzing the unreacted -COCl groups of the polymethacryloyl chloride in a solution of a solute selected from primary-, secondary, and tertiary aliphatic, aromatic, alkylaromatic alcohols, glycols or polyols, or primary, or secondary, aliphatic, aromatic, or alkylaromatic amines, or diamines or polyamines, in the presence of an organic base,
the siloxane pre-polymer and the solution which contains the polymer and the ionophore being spin-on deposited by means of a rotary disk machine.

6. Process according to Claim 4 or Claim 5, wherein the heat treatment of the silane pre-polymer is carried out at a temperature of from 80°C to 140°C.

7. Process according to Claim 4 or Claim 5, wherein the heat treatment of the solution deposited on the polysiloxane matrix is carried out at a temperature of from 80°C to 140°C.

8. Process according to Claim 4 or Claim 5, wherein the thickness of the siloxane pre-polymer if from 0,5 µm to 2 µm.

9. Process according to Claim 4 or Claim 5, wherein the thickness of the ionophore and polymer containing layer is from 0,5 µm to 5 µm.

10. Process according to Claim 4 or Claim 5, wherein the rotary disk machine is rotated at an angular speed of from 400 rpm to 4500 rpm.

11. Process according to Claim 4 or Claim 5, wherein the polysiloxane matrix consists of aminoethyl-aminopropyl trimethoxysilane and anthranylamido-propyl triethoxysilane.

12. Process according to Claim 4 or Claim 5, wherein the ionophore is selected from those having an organic cyclic structure.

13. Process according to Claim 12, wherein the ionophore is selected from valinomycin, the crown ethers and the cryptands

14. Process according to Claim 5, wherein the functionalized ionophore is a crown ether.

15. Process according to Claim 14, wherein the crown ether is selected from the diaminodibenzo crown ethers and their homologs or derivatives.

16. Process according to Claim 15, wherein the crown ether is the dibenzo-18,6-crown ether.

## Patentansprüche

1. Ionenempfindliche Vorrichtung, bestehend aus den folgenden, übereinander angeordneten Elementen:
- einer Aluminiumelektrodenplatte (1);
- einem Siliziumkörper (2);
- einer SiO₂-Schicht (3);
- einer Membran (4), umfassend eine Polysiloxanmatrix (5) und eine Ionophor-hältige organische Polymermatrix (6) und
- einer Platinelektrode (8),
dadurch gekennzeichnet, daß die organische Polymermatrix (6) ein lineares Polymethacryloylchlorid ist und daß die Polysiloxanmatrix (5) entweder
- aus der Gruppe der funktionellen Organosilane mit der allgemeinen Formel: 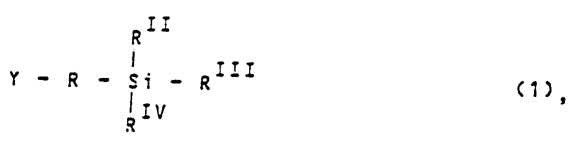 worin:
R^{II}, R^{III} und R^{IV}, die gleich oder voneinander verschieden sind, C₁-C₁₀-Alkyl oder -Alkoxy bedeuten;
R für C₁-C₁₀-Alkyl oder Aryl steht und Y die Bedeutung -NH₂ oder -NHCH₂-CH₂-NH₂ hat;
oder
- aus der Gruppe von funktionellen Organosilanen mit der allgemeinen Formel: 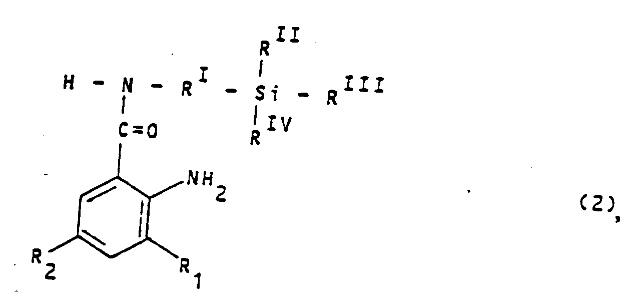 worin:
R₁ und R₂, die gleich oder voneinander verschieden sind, für -Cl, -Br, -CH₃, -NO₂, -NH₂ oder -H stehen;
R^{II}, R^{III} und R^{IV} C₁-C₁₀-Alkyl oder -Alkoxy darstellen und
R^{I} unter C₁-C₁₀-Alkyl, Aminoalkyl, Aminoalkylaryl oder Alkylaryl ausgewählt ist,
ausgewählt ist.

2. Vorrichtung nach Anspruch 1, worin der Ionophor physikalisch von dem Polymethacryloylchlorid eingeschlossen ist.

3. Vorrichtung nach Anspruch 1, worin das Polymethacryloylchlorid überwiegend kovalent an den Ionophor gebunden ist.

4. Verfahren zur Herstellung einer Vorrichtung nach Anspruch 1, welches die folgenden Stufen umfaßt:
- Bereiten eines Siloxanpräpolymers;
- Ablagern des Siloxanpräpolymers auf wenigstens eine Elektrolyt-Oxid-Halbleiter-Vorrichtung oder eine Chemische Feld-Effekt-Halbleitervorrichtung;
- Wärmebhandlung dieser Vorrichtung zur Ausbildung einer Polysiloxanmatrix und einer chemischen Adhäsion der Matrix an das Siliziumoxid;
- Auflösen von Polymethacryloylchlorid und einem gegebenenfalls funktionalisierten Ionophor in einem organischen Lösungsmittel;
- Ablagern der gebildeten Lösung auf der Polysiloxanmatrix;
- Wärmebehandlung der mit der Lösung beschichteten Polysiloxanmatrix;
- Solvolyse der nicht-umgesetzten -COCl-Gruppen des Polymethacryloylchlorids in einer Lösung eines gelösten Stoffes, ausgewählt unter primären, sekundären und tertiären aliphatischen, aromatischen, alkylaromatischen Alkoholen, Glykolen oder Polyolen oder primären oder sekundären aliphatischen, aromatischen oder alkylaromatischen Aminen oder Diaminen oder Polyaminen, in Gegenwart einer organischen Base;
wobei das Siloxanpräpolymer und die das Polymer und den Ionophor enthaltende Lösung nach dem Aufschleuderverfahren mittels einer Drehtellermaschine abgeschieden werden.

5. Verfahren zur Herstellung einer Vorrichtung nach Anspruch 3, welches die folgenden Stufen umfaßt:
- Herstellen eines Siloxanpräpolymers;
- Ablagern des Siloxanpräpolymers auf wenigstens einer Elektrolytoxidhalbleitervorrichtung oder einer chemischen Feld-Effekt-Halbleitervorrichtung;
- Wärmebehandlung dieser Vorrichtung zur Ausbildung einer Polysiloxanmatrix und von chemischer Adhäsion der Matrix an das Siliziumoxid;
- Auflösen von Polymethacryloylchlorid und eines funktionalisierten Ionophors in einem organischen Lösungsmittel;
- Umsetzen des funktionalisierten Ionophors mit Polymethacryloylchlorid bei einer Temperatur von 40°C bis 70°C während einer Zeit von 4 bis 6 Stunden;
- Ablagern der gebildeten Lösung auf der Polysiloxanmatrix;
- Wärmebehandlung der mit der Lösung bedeckten Polysiloxanmatrix;
- Solvolyse der nicht-umgesetzten COCl-Gruppen des Polymethacryloylchlorids in einer Lösung eines gelösten Stoffes, ausgewählt unter primären, sekundären und tertiären aliphatischen, aromatischen, alkylaromatischen Alkoholen, Glykolen oder Polyolen, oder primären oder sekundären aliphatischen, aromatischen oder alkylaromatischen Aminen, oder Diaminen oder Polyaminen in Gegenwart einer organischen Base;
wobei das Siloxanpräpolymer und die das Polymer und den Ionophor enthaltende Lösung nach dem Aufschleuderverfahren mittels einer Drehtellermaschine abgeschieden werden.

6. Verfahren nach Anspruch 4 oder 5, worin die Wärmebehandlung des Silanpräpolymers bei einer Temperatur von 80°C bis 140°C vorgenommen wird.

7. Verfahren nach Anspruch 4 oder 5, worin die Wärmebehandlung der auf der Polysiloxanmatrix abgeschiedenen Lösung bei einer Temperatur von 80°C bis 140°C ausgeführt wird.

8. Verfahren nach Anspruch 4 oder 5, worin die Stärke des Siloxanpräpolymers von 0,5 µm bis 2 µm beträgt.

9. Verfahren nach Anspruch 4 oder 5, worin die Stärke der den Ionophor und das Polymer enthaltenden Schicht von 0,5 µm bis 5 µm beträgt.

10. Verfahren nach Anspruch 4 oder 5, worin die Drehtellermaschine mit einer Winkelgeschwindigkeit von 400 U/min bis 4500 U/min betrieben wird.

11. Verfahren nach Anspruch 4 oder 5, worin die Polysiloxanmatrix aus Aminoethyl - aminopropyl -trimethoxysilan und Anthranylamidopropyltriethoxysilan besteht.

12. Verfahren nach Anspruch 4 oder 5, worin der Ionophor unter solchen mit einer organischen cyklischen Struktur ausgewählt wird.

13. Verfahren nach Anspruch 12, worin der Ionophor unter Valinomycin, den Kronenethern und den Kryptanden ausgewählt wird.

14. Verfahren nach Anspruch 5, worin der funktionalisierte Ionophor ein Kronenether ist.

15. Verfahren nach Anspruch 14, worin der Kronenether unter den Diaminodibenzokronenethern und ihren Homologen oder Derivaten ausgewählt wird.

16. Verfahren nach Anspruch 15, worin der Kronometer der Dibenzo-18,6-kronenether ist.

## Revendications

1. Dispositif sensible aux ions, constitué des éléments suivants superposés :
- une plaque d'électrode en aluminium (1),
- un corps en silicium (2),
- une couche de SiO₂ (3),
- une membrane (4) comprenant une matrice de polysiloxane (5) et une matrice de polymère organique (6) contenant un ionophore, et
- une électrode en platine (8),
caractérisé en ce que :
la matrice de polymère organique (6) est constituée d'un poly(chlorure de méthacryloyle) linéaire, et en ce que
la matrice de polysiloxane (5) est choisie :
- soit dans le groupe des organosilanes fonctionnels de formule générale : 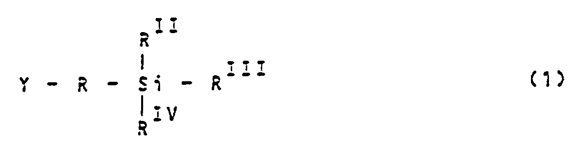 dans laquelle R^{II}, R^{III} et R^{IV}, identiques ou différents l'un de l'autre, représentent des groupes alkyle ou alcoxy en C₁-C₁₀, R représente un groupe alkyle en C₁₋₁₀ ou un groupe aryle, et Y représente -NH₂ ou -NH-CH₂-CH₂-NH₂,
- soit dans le groupe des organosilanes fonctionnels de formule générale : 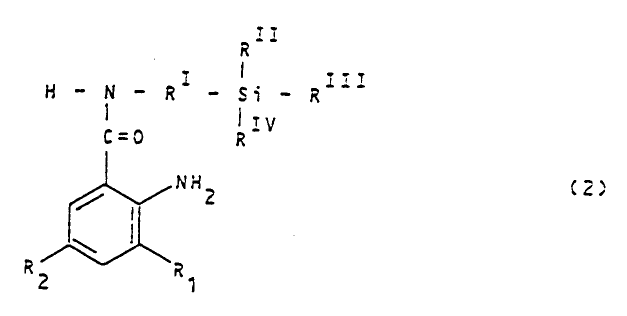 dans laquelle R₁ et R₂, identiques ou différents l'un de l'autre, représentent -Cl, -Br, -CH₃, -NO₂, -NH₂ ou -H,
R^{II}, R^{III} et R^{IV} représentent des groupes alkyle ou alcoxy en C₁-C₁₀, et
R¹ est choisi parmi les groupes alkyle en C₁₋₁₀, aminoalkyle, ou aminoalkyl-aryle et alkyl-aryle.

2. Dispositif selon la revendication 1, dans lequel le ionophore est physiquement encagé par le poly(chlorure de méthacryloyle).

3. Dispositif selon la revendication 1, dans lequel le poly(chlorure de méthacryloyle) est lié au ionophore, de façon prédominante, par liaison covalente.

4. Procédé de préparation d'un dispositif tel que défini dans la revendication 1, comprenant les étapes consistant à :
- préparer un prépolymère de siloxane;
- déposer le prépolymère de siloxane sur au moins un dispositif à semiconducteur électrolyte-oxyde ou un dispositif chimique à semiconducteur à effet de champ;
- traiter à chaud ledit dispositif pour obtenir une matrice de polysiloxane et l'adhésion chimique de ladite matrice à l'oxyde de silicium;
- dissoudre du poly(chlorure de méthacryloyle) et un ionophore, éventuellement fonctionnalisé, dans un solvant organique;
- déposer la solution résultante sur la matrice de polysiloxane;
- traiter à chaud la matrice de polysiloxane revêtue de la solution;
- réaliser la solvolyse des groupes -COCl n'ayant pas réagi du poly(chlorure de méthacryloyle), dans une solution d'un soluté choisi parmi les alcools aliphatiques primaires, secondaires et tertiaires, les alcools aromatiques, les alcools alkyl-aromatiques, les glycols, les polyols, les amines aliphatiques primaires et secondaires, les amines aromatiques, les amines alkylaromatiques, les diamines et les polyamines, en présence d'une base organique,
le prépolymère de siloxane et la solution contenant le polymère et le ionophore étant déposés par rotation, à l'aide d'une machine à disque rotatif.

5. Procédé de préparation d'un dispositif tel que défini dans la revendication 3, comprenant les étapes consistant à :
- préparer un prépolymère de siloxane;
- déposer le prépolymère de siloxane sur au moins un dispositif à semiconducteur électrolyte-oxyde ou un dispositif chimique à semiconducteur à effet de champ;
- traiter à chaud ledit dispositif pour obtenir une matrice de polysiloxane et l'adhésion chimique de ladite matrice à l'oxyde de silicium;
- dissoudre du poly(chlorure de méthacryloyle) et un ionophore, éventuellement fonctionnalisé, dans un solvant organique;
- faire réagir le ionophore fonctionnalisé avec le poly(chlorure de méthacryloyle) à une température de 40°C à 70°C pendant une durée de 4 à 6 heures;
- déposer la solution résultante sur la matrice de polysiloxane;
- traiter à chaud la matrice de polysiloxane revêtue de la solution;
- réaliser la solvolyse des groupes -COCl n'ayant pas réagi du poly(chlorure de méthacryloyle), dans une solution d'un soluté choisi parmi les alcools aliphatiques primaires, secondaires et tertiaires, les alcools aromatiques, les alcools alkyl-aromatiques, les glycols, les polyols, les amines aliphatiques primaires et secondaires, les amines aromatiques, les amines alkylaromatiques, les diamines et les polyamines, en présence d'une base organique,
le prépolymère de siloxane et la solution contenant le polymère et le ionophore étant déposés par rotation, à l'aide d'une machine à disque rotatif.

6. Procédé conforme à la revendication 4 ou 5, dans lequel le traitement thermique du prépolymère de siloxane est effectué à une température de 80°C à 140°C.

7. Procédé conforme à la revendication 4 ou 5, dans lequel le traitement thermique de la solution déposée sur la matrice de polysiloxane est effectué à une température de 80°C à 140°C.

8. Procédé conforme à la revendication 4 ou 5, dans lequel l'épaisseur du prépolymère de siloxane vaut de 0,5 µm à 2 µm.

9. Procédé conforme à la revendication 4 ou 5, dans lequel l'épaisseur de la couche contenant le ionophore et le polymère vaut de 0,5 µm à 5 µm.

10. Procédé conforme à la revendication 4 ou 5, dans lequel on fait tourner la machine à disque rotatif à une vitesse angulaire valant de 400 t/min à 4500 t/min.

11. Procédé conforme à la revendication 4 ou 5, dans lequel la matrice de polysiloxane est constituée d'aminoéthyl-aminopropyltriméthoxysilane et d'anthranylamido-propyltriéthoxysilane.

12. Procédé conforme à la revendication 4 ou 5, dans lequel l'ionophore est choisi parmi ceux présentant une structure organique cyclique.

13. Procédé conforme à la revendication 12, dans lequel l'ionophore est choisi parmi la valinomycine, les éthers-couronnes et les cryptands.

14. Procédé conforme à la revendication 5, dans lequel l'ionophore fonctionnalisé est un éther-couronne.

15. Procédé conforme à la revendication 14, dans lequel l'éthercouronne est choisi parmi les diaminodibenzo-éthers-couronnes et leurs homologues et dérivés.

16. Procédé conforme à la revendication 15, dans lequel l'éthercouronne est le dibenzo-18,6-éther-couronne.
